**Europäisches Patentamt**

**European Patent Office**

**Office européen des brevets**

(19)

(11) Veröffentlichungsnummer : **0 276 240 B1**

(12)

# EUROPÄISCHE PATENTSCHRIFT

(45) Veröffentlichungstag der Patentschrift :
26.02.92 Patentblatt 92/09

(51) Int. Cl.$^5$ : **B01D 3/12**, C10G 7/06

(21) Anmeldenummer : **87904378.4**

(22) Anmeldetag : **16.07.87**

(86) Internationale Anmeldenummer :
**PCT/CH87/00087**

(87) Internationale Veröffentlichungsnummer :
**WO 88/00493 28.01.88 Gazette 88/03**

(54) **VERFAHREN ZUM WEITERVERARBEITEN DES VAKUUMDESTILLATIONSRÜCKSTANDES IN EINER ROHÖLRAFFINERIE.**

Die Akte enthält technische Angaben, die nach dem Eingang der Anmeldung eingereicht wurden und die nicht in dieser Patentschrift enthalten sind.

(30) Priorität : **23.07.86 CH 2954/86**

(43) Veröffentlichungstag der Anmeldung :
**03.08.88 Patentblatt 88/31**

(45) Bekanntmachung des Hinweises auf die Patenterteilung :
**26.02.92 Patentblatt 92/09**

(84) Benannte Vertragsstaaten :
**BE FR IT**

(56) Entgegenhaltungen :
**EP-A- 0 066 790**
**EP-A- 0 189 610**
**DE-A- 3 122 650**

(73) Patentinhaber : **BUSS AG**
**Lautengartenstrasse 7**
**CH-4052 Basel (CH)**

(72) Erfinder : **KAPPENBERGER, Peter**
**Schützenrain 31**
**CH-8047 Zürich (CH)**

(74) Vertreter : **Patentanwälte Schaad, Balass & Partner**
**Dufourstrasse 101 Postfach**
**CH-8034 Zürich (CH)**

## Beschreibung

Die Erfindung betrifft ein Verfahren gemäß dem Oberbegriff von Anspruch 1.

Nach dem letzten, unter Vakuum durchgeführten Schritt der fraktionierten Destillation des Rohöls in der Raffinierie verbleiben im Destillationsrückstand jene Stoffe, die bis etwa 550°C (Normaldruck) nicht verdampfen. Dieser Destillationsrückstand entspricht im allgemeinen - je nach Herkunft des Rohöls - 25% der Rohölzuspeisung. Seine Weiterverarbeitung kann in der Praxis durch Lösungsmittelbehandlung erfolgen, z.B. durch Deasphaltierung mittels Propan. Dadurch wird der Rückstand in eine erste, im Lösungsmittel lösliche Schmieröle und Wachse und eine zweite, im Lösungsmittel unlösliche Asphalte, Asphaltene etc. enthaltende Fraktion getrennt. Dabei wird eine grössere Menge der zweiten Fraktion erhalten. Aus der ersten Lösungs-Fraktion können wertvolle Nichtbrennstoffe wie Schmieröle und Wachse gewonnen werden oder sie kann zur Gewinnung niedrigsiedender Produkte einer Krackeinrichtung zugeführt werden. Die im Lösungsmittel unlösliche zweite Fraktion oder Niederschlag wird entweder zur Bitumenherstellung oder am Ort als Brennstoff für die Raffinerie oder, nach Beimischung einer leichteren Fraktion zur Verflüssigung, als schwerer Brennstoff ausserhalb, z.B. für Kraftwerke, verwendet.

Die Aufarbeitung des Vakuumdestillationsrückstandes mittels Lösungsmittel birgt verschiedene Nachteile und Beschränkungen in sich. Die nach der Lösungsmittelbehandlung unlöslich zurückbleibende minderwertige asphalthaltige Fraktion entspricht oft mehr als der Hälfte des Vakuumrückstandes, der bei schweren Rohölen 40% oder mehr des Rohöls betragen kann. Ein derart grosser Anteil übersteigt den Brennstoffbedarf der Raffinerie. Bei der zweiten Verwendungsmöglichkeit der unlöslichen Fraktion, der Bitumenherstellung, ergeben sich auch Probleme, da bei der Lösungsmittelbehandlung die im Rohöl in kolloider Form vorliegenden Asphaltene und Asphalte ausgefällt werden. Ein für die Bitumenherstellung unerlässliches vollständiges Wiederdispergieren ist aber oft nicht mehr möglich, so dass ein minderwertiges Produkt erhalten wird.

Weiterhin wird durch die Lösungsmittelbehandlung der Schmieröl- und Wachsanteil nicht vollständig in Lösung gebracht, hingegen werden hochmolekulare Bestandteile gelöst und in die erste Fraktion eingebracht, was für die darauf gewonnenen Endprodukte nachteilig ist, so z.B. zum verstärkten Verkoken der daraus gewonnenen Schmieröle führt.

Ausserdem erfordert die Verwendung von niedrig-siedendem Lösungsmittel besondere Sicherheitsmassnahmen, insbesondere kostspielige Apparaturen. Die Rückgewinnung des Lösungsmittels ist energieaufwendig und, infolge des grossen Lösungsmittel/Rückstandverhältnisses, kostspielig.

In der EP-A-0 066 790 wird ein Verfahren zur Kurzwegdestillation des Rückstandes aus der Erdölraffinerie beschrieben. Dabei ist sowohl Verdampfungsdruck als auch Temperatur der Kondensationsflächen von der Speisung bis zur Rückstandsabnahme abnehmend. Zur Verbesserung der Energiebilanz wird der Rückstand aus der Vakuumdestillation ohne jede Energiezufuhr der Kurzwegdestillation zugeführt, so dass die Verdampfungswärme der Speisung - die die Rückstandstemperatur des Vakuumdestillationsrückstandes aufweist - entzogen wird, was zwangsläufig zur Abkühlung und mithin zu niedrigeren Temperaturen bei der Kurzwegdestillation als bei der vorangehenden Vakuumdestillation führt.

Gemäss der DE-A-31 22 650 wird innerhalb der Erdölraffinerie eine Kurzwegdestillation angewendet, wodurch die Ausbeute des crackbaren Anteils erhöht wird; gleichzeitig kann auf die übliche Lösungsmittelextraktion verzichtet werden. Durch Senkung des Arbeitsdruckes kann die Destillationstemperatur weitgehend gesenkt werden, so dass eine schonende Destillation von Anteilen mit einem hohen atmosphärischen Siedepunkt möglich wird. Zur Heizung wird der Rückstand aus der der Kurzwegdestillation vorangehenden Vakuumdestillation verwendet, der die Verdampfungswärme entzogen wird, so dass die Kurzwegdestillation bei einer tieferen Temperatur erfolgt als die vorangehende Vakuumdestillation.

In der EP-A-189 610 (publiziert am 06.08.86; Stand der Technik nach Art. 54(3) EPÜ) wird ein Verfahren zur Kurzwegdestillation von Vakuumdestillationsrükständen beschrieben, wobei die Rückstände vor der Einspeisung in den Verdampfererhitzt werden und die Verdampfung ebenfalls unter Abkühlung erfolgt.

Aufgabe der vorliegenden Erfindung ist es, ein Verfahren zur Kurzwegdestillation des Rückstandes aus der Vakuumdestillation von Rohöl vorzuschlagen, das eine grössere Wirtschaftlichkeit aufweist als die bisher beschriebenen Verfahren.

Gelöst wird diese Aufgabe durch die im Kennzeichen von Anspruch 1 angeführten Merkmale.

Es wurde überraschenderweise gefunden, dass durch Erhöhung des Energieaufwandes die Wirtschaftlichkeit der Dünnschicht-Kurzwegdestillation des Rückstandes aus der Vakuumdestillation bedeutend verbessert wird, d.h., dass eine verschlechterte Energiebilanz eine wirtschaftliche Verbesserung bringt. Die Erhöhung des Energieaufwandes erfolgt erfindungsgemäss durch Erhöhung der Temperatur der Kurzwegdestillation gegenüber der Temperatur der vorangehenden Vakuumdestillation. Dadurch wird die Destillationsaüsbeute, die Speisegeschwindigkeit und mithin die Destillationsleistung erheblich erhöht, wobei dies unter gleichzeitiger Erhöhung des Destillationsanteils zu Lasten des weniger wertvollen Rückstandes erfolgt.

Nach dem Extraktionsverfahren des Standes der Technik wurde mit einem apolaren Lösungsmittel auf Grund der Polarität, d.h. der chemischen Struktur der Stoffe, getrennt. Mit den bekannten Kurzwegdestillationsverfahren wird der Vakuumrückstand auf Grund der Siedetemperatur der vorliegenden Stoffe getrennt. Erfindungsgemäss werden durch die hohe Temperatur wertvolle Produkte, die gemäss dem Stand der Technik im minderwertigen Rückstand verblieben wären, mit dem Destillat gewonnen. Deshalb wird erfindungsgemäss nicht nur ein quantitativer Vorteil durch die grössere Menge des wertvolleren Produktes, sondern auch eine andersartige Zusammensetzung der Fraktionen und dadurch weitere qualitative Vorteile erzielt.

Stärker als die Verbesserung des Verhältnisses Destillat/Rückstand fällt ins Gewicht, dass durch die höhere Temperatur die Speisegeschwindigkeit pro Zeiteinheit und pro Verdampferfläche um ein mehrfaches erhöht werden kann. Dadurch wird die Wirtschaftlichkeit des Verfahrens ausserordentlich verbessert.

Auch die Differenz der sogenannten C/H-Verhältnisse, d.h. der Verhältnisse von Kohlenstoff zu Wasserstoff, zwischen Destillat und Rückstand wird durch das erfindungsgemässe Verfahren stark erhöht.

Weiterhin ist erfindungsgemäss eine stark verkürzte Verweilzeit mit sehr geringer Streuung, d.h. grosser Gleichmässigkeit, gewährleistet.

Gleichzeitig erlaubt die erhöhte Temperatur ein problemloses Wegführen des an hochmolekularen Stoffen angereicherten Rückstandes.

Die erfindungsgemäss erhaltenen Schmieröle können ohne Zusätze in der gleichen Weise verwendet werden wie Schmieröle, die nach konventionellen Vakuumdestillationsverfahren erhalten und mit kostspieligen Additiven auf die gewünschte Viscosität eingestellt werden. Ausserdem ist das Destillat praktisch frei von metallhaltigen Bestandteilen, wodurch das Cracken mit auf Fremdstoffe empfindlichen Katalysatoren zur Herstellung niedrigsiedender Stoffe problemlos wird. Weiterhin verbleiben erfindungsgemäss die Polyaromate im Rückstand, was die Qualität des Destillates zusätzlich verbessert und die kolloidalen Asphaltene im Rückstand stabilisiert.

Die asphalthaltige Fraktion, d.h. der Rückstand der Dünnschicht-Kurzwegdestillation, ist hier, verglichen mit dem Stand der Technik, nicht nur quantitativ derart vermindert, dass seine vollständige Verwendung in der Raffinerie als Brennstoff möglich ist, sondern sie ist qualitativ auch verändert, indem sie sich bei der Bitumenherstellung ohne weiteres erneut dispergieren lässt. Diese Eigenschaft kann u.a. mit einem erhöhten Gehalt an polaren Komponenten zusammenhängen. Ausserdem fällt bei stark wachshaltigen Rohölen ins Gewicht, insbesondere bei dieser Verwendung Bitumen/Asphalt, dass der Rückstand praktisch keinen Wachsgehalt mehr aufweist.

Die Dünnschicht-Kurzwegdestillation bzw. seine apparative Ausgestaltung, ist in der Verfahrenstechnik bekannt und wurde hauptsächlich zur schonenden Gewinnung der Reinigung wärmeempfindlicher Stoffe angewendet, um deren thermische Zersetzung zu vermeiden. Erfindungsgemäss ist hingegen eine thermische Zersetzung sogar erwünscht, da dadurch eine grössere Menge des erwünschten, wertvolleren Destillates gewonnen wird, und in geringem Masse möglich, solange das Vakuum aufrechterhalten werden kann.

Durch das erfindungsgemässe Verfahren wird der bisher letzte, nicht weiter-destillierbare Destillationsrückstand in der Oelraffinerie, der über etwa 550°C (bei Normaldruck) siedet, einer Destillation unter quantitativen und qualitativen Vorteilen zugänglich. Dabei werden Produkte neuer Zusammensetzung mit z.T. neuen Eigenschaften erhalten.

Im weiteren können erfindungsgemäss aus schweren Rohölen, die etwa 50% oder sogar mehr Vakuumdestillationsrückstand haben und die deshalb kommerziell kaum verwertbar sind, Destillate in Mengen wie bei üblichen Rohölen gewonnen werden, so dass sie nun auch verwertbar werden.

Das erfindungsgemässe Verfahren kann mit bekannten Einrichtungen für die Dünnschicht-Kurzwegdestillation ausgeführt werden. Diese werden im Anschluss an die letzte Stufe der Raffinerie, der Vakuumdestillation, angeordnet. Die Temperaturen bei der Dünnschicht-Kurzwegdestillation sind höher und der Druck ist etwa um den Faktor $10^{-1}$ bis $10^{-3}$ kleiner als bei der vorangehenden Vakuumdestillation. Gemäss einer besonderen Ausführungsform der Erfindung wird mit steigendem Temperaturverlauf gearbeitet. Für das vorgesehene Vakuum, bei dem grosse Dampfvolumina entstehen, sollten Verdampfungs- und Kondensationsfläche möglichst nahe zueinander angeordnet sein. Dies wird im allgemeinen durch koaxiale Verdampfungs- und Kondensationsbereiche erreicht. Vorteilhaft sind die Verdampfungs- und Kondensationsflächen zylindrisch vertikal angeordnet. Das eingespeiste Material wird gleichmässig auf dem oberen Teil der Heizfläche verteilt und in einen turbulenten Zustand übergeführt, der beibehalten wird, bis das Material durch Gravitation die Heizfläche unten verlässt. Dadurch wird an der ganzen Heizfläche aufgewärmtes Material sofort der Flüssigkeitsoberfläche zugeführt und die niedriger siedende Fraktion verdampft.

Es können mehrere Dünnschicht-Kurzweg-Apparaturen in Serie oder parallel angeordnet werden.

Beispiel 1

Der bis 530°C (Temperaturangabe bezogen auf Normaldruck) nicht destillierbare Rückstand aus der Vakuumdestillationsstufe wurde einer SAMVAC-Dünnschicht-Kurzwegdestillationsanlage der Firma Buss AG zugeführt. Die Betriebsdaten waren:

| | |
|---|---|
| Speisegeschwindigkeit | 13,1 kg/h |
| Druck | $4,5 \cdot 10^{-2}$ mbar |
| Heiztemperatur | 351°C |
| Kühltemperatur | 103°C |
| Destillatgeschwindigkeit | 6,5 kg/h |
| Destillatanteil | 49,6% |

Der Rückstand wurde mittels einer Pumpe kontinuierlich dem Einlass des Verdampfers zugeführt und mit einem rotierenden Verteilerring gleichmässig auf die Innenfläche verteilt. Dann erfassen die Rotor-Wischblätter, die sich entlang der Verdampfungsfläche bewegen, das Material und beaufschlagen die Heizfläche mit einem turbulenten Film. Vor den Rotor-Wischblättern entsteht eine Wellenfront (bow-wave).

Die Menge des Durchsatzes und des Destillates konnte durch Erhöhung der Heiztemperatur bedeutend erhöht werden, was vor allem auf das Verdampfen höhermolekularer Stoffe zurückzuführen ist.

Nachfolgend sind die Angaben weiterer Beispiele zusammengestellt. Die Beispiele 1 bis 5 wurden im Hinblick auf die Erhöhung des Destillatanteils und die Beispiele 6 bis 10 im Hinblick auf die Erhöhung der Speisegeschwindigkeit durchgeführt.

| Beispiel | 2 | 3 | 4 | 5 |
|---|---|---|---|---|
| **Speisung** | | | | |
| Speisegeschwindigkeit kg/h | 21,5 | 26,7 | 15,5 | 13,8 |
| Temperatur Vorratsgefäss °C | 201 | 205 | 206 | 205 |
| Temperatur Speiseleitung °C | 175 | 189 | 183 | 320 |
| **Konzentrat** | | | | |
| Austrittsgeschwindig-keit kg/h | 13,45 | 17,9 | 8,5 | 7,27 |
| **Destillat** | | | | |
| Austrittsgeschwindig-keit kg/h | 8,05 | 8,8 | 7,0 | 6,53 |
| Vakuum mbar | $4 \times 10^{-2}$ | $4 \times 10^{-2}$ | $3,5 \times 10^{-2}$ | $5 \times 10^{-2}$ |
| Heizmittel Eintritt °C | 332 | 329 | 333 | 350 |
| Heizmittel Austritt °C | 312 | 313 | 319 | 333 |
| Kühlmittel Eintritt °C | 93 | 95 | 95 | 103 |
| Kühlmittel Austritt °C | 94 | 96 | 97 | 105 |
| Destillatanteil % | 37,4 | 33,0 | 45,2 | 47,4 |

| Beispiel Nr. | Heiztemp. °C | Destillat in % der Speisung | Speisegeschwindig-keit kg/h |
|---|---|---|---|
| 6 | 364 | 59 | 21,3 |
| 7 | 371 | 56 | 39,6 |
| 8 | 374 | 61 | 24,3 |
| 9 | 386 | 63 | 39,7 |
| 10 | 394 | 61,5 | 51,3 |

Bei diesen Versuchen hat sich gezeigt, dass Durchsatzgeschwindigkeiten von 225 kg/h m$^2$ ohne weiteres erreicht werden konnten, was einen wirtschaftlichen Einsatz im Raffineriemassstab garantiert.

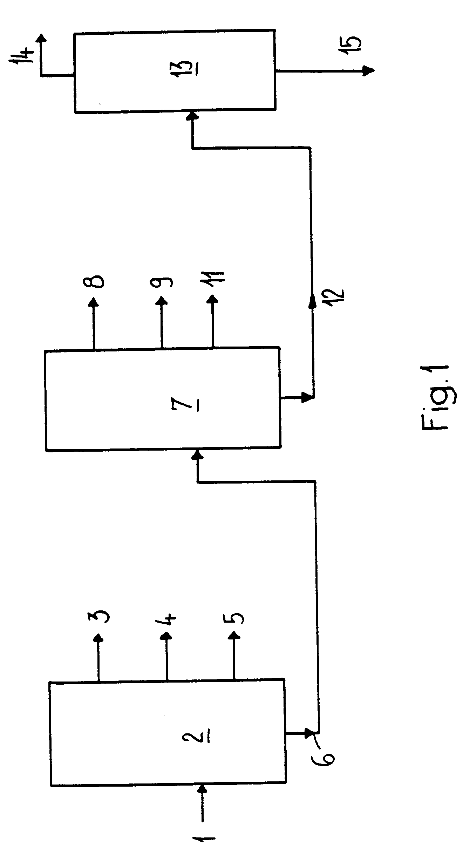

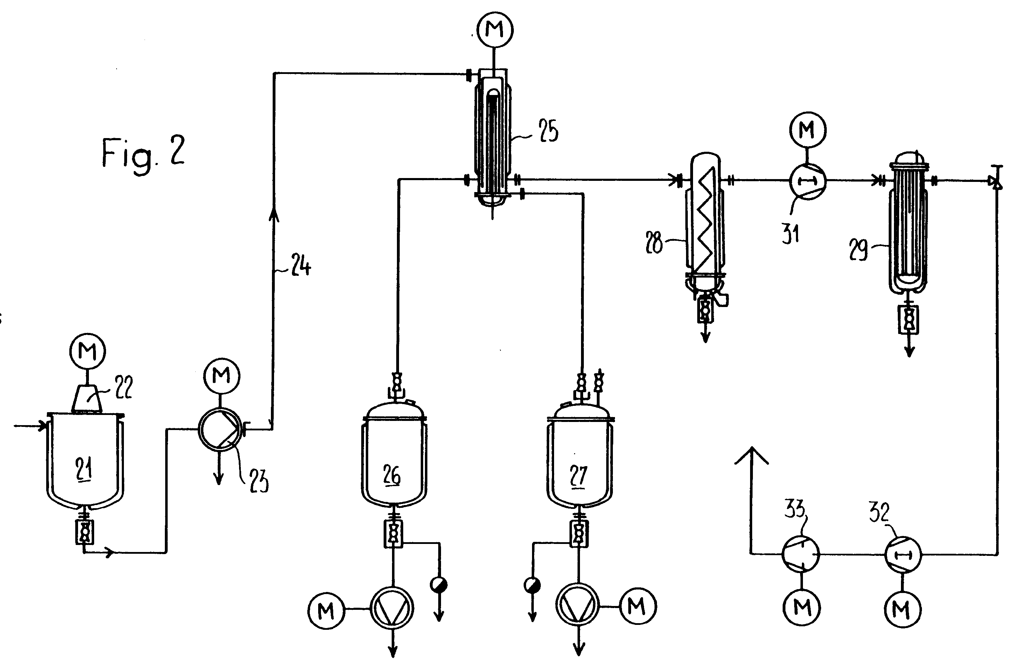

Die Erfindung wird anhand der Figuren 1 und 2 weiter veranschaulicht. Es wird die Versuchsanlage, mit der die oben erwähnten Versuche gefahren wurden, dargestellt. Es zeigen rein schematisch

Fig. 1 das vereinfachte Fliessschema des Destillationstraktes einer Rohölraffinerie;

Fig. 2 eine Anlage zur Durchführung des erfindungsgemässen Verfahrens.

Ein Rohöl 1 durchschnittlicher Qualität in Fig. 1 wird einer bei Normaldruck operierenden Rektifizieranlage 2 zugeführt. Nach dem Verdampfen verlassen etwa 50% des eingespeisten Rohöls diese Anlage in Form von getrennten Fraktionen 3, 4, 5. Der Rückstand 6 wird einer weiteren, unter Vakuum arbeitenden Rektifizieranlage 7 zugeführt, die etwa 25 % des Rohöls als Fraktionen 8, 9, 11 verlassen. Der undestillierbare Rückstand 12 wird nun der erfindungsgemässen Weiterbehandlung, d.h. der Dünnschicht-Kurzwegdestillation zugeführt. Dabei wird ein Destillat 14 und der undestillierbare Rückstand 15 gewonnen. Das Destillat 14 kann entweder einer Crackanlage zum Gewinnen niedermolekularer Produkte zugeführt oder weiter in Schmieröl und Wachs aufgetrennt werden. Der Rückstand 15 wird als Brennstoff in der Raffinerie eingesetzt oder zu Teer weiterverarbeitet.

Die Anlage in Fig. 2 zur Durchführung des erfindungsgemässen Verfahrens weist ein Aufgabegefäss 21 mit einem Rührwerk 22 auf. Mit M werden in der ganzen Figur die zu den einzelnen Einrichtungen gehörenden Motoren bezeichnet. Das Aufgabegefäss 21 ist über eine mit einer Speisepumpe 23 versehene Leitung 24 mit einem Kurzwegverdampfer 25 verbunden, der seinerseits mit einer Rückstandvorlage 26 und einer Destillatvorlage 27 verbunden ist. Weiterhin sind an den Kurzwegverdampfer 25 zwei aufeinanderfolgende Kühlfallen 28, 29 angeschlossen. Zwischen den Kühlfallen 28, 29 ist eine Wälzkolben-Vakuumpumpe 31 und nach der zweiten Kühlfalle eine Wälzkolben-Vakuumpumpe 32 und danach eine Drehschieber-Vakuumpumpe 33 angeordnet.

Der in das Aufgabegefäss 21 eingeführte Rückstand der Vakuumrektifikationsstufe wird mittels der Pumpe 23 durch die Leitung 24 in den Kurzwegverdampfer 25 eingeführt, wo er durch Verdampfen in Destillat und Rückstand getrennt und in den Vorlagen 26, 27 getrennt aufgefangen wird.

(Eine kleine Menge gegebenenfalls vorhandene leichtflüchtige Bestandteile, die durch thermische Zersetzung im Kurzwegverdampfer 25 entstehen könnte, wird getrennt in den Kühlfallen 28, 29 aufgefangen.)

Die Heiztemperaturen bei der erfindungsgemässen Dünnschicht-Kurzwegdestallation können oberhalb der im obigen Ausführungsbeispiel angegebenen Temperaturen liegen. Bevorzugt werden 400°C oder höhere Temperaturen.

## Patentansprüche

1. Verfahren zum Weiterverarbeiten des in einer Rohölraffinerie bei der Vakuumdestillation zurückbleibenden Rückstandes durch Dünnschicht-Kurzwegdestillation unter Vakuum, bei dem das Destillat und der konzentrierte Rückstand getrennt weggeführt werden, dadurch gekennzeichnet, dass man bei der Dünnschicht-Kurzweg-destillation die Verdampferflächen derart beheizt, daß man deren Temperatur höher als die Temperatur des bei der Vakuumdestillation zurückbleibenden Rückstandes einstellt, sodaß eine thermische Zersetzung des Rückstandes stattfindet.

2. Verfahren nach Anspruch 1, dadurch gekennzeichnet, dass die Temperatur der Verdampferfläche 50°, vorzugsweise 80°C, insbesondere 100°C höher liegt als die Temperatur des bei der Vakuumdestillation zurückbleibenden Rückstandes.

3. Verfahren nach Anspruch 1, dadurch gekennzeichnet, dass man die dünne Schicht des zu destillierenden Materials in form eines turbulenten Films ausbildet.

4. Verfahren nach Anspruch 3, dadurch gekennzeichnet, dass man dem Film mit einem mechanischen Mittel Turbulenz verleiht.

5. Verfahren nach Anspruch 4, dadurch gekennzeichnet, dass man dem Film mittels Wischerblättern Turbulenz verleiht.

6. Verfahren nach einem oder mehreren der vorangehenden Ansprüche, dadurch gekennzeichnet, dass man einen Rückstand aus der Vakuumdestillation, der bei Normaldruck einen Siedepunkt von über 550°C aufweist, verarbeitet.

7. Verfahren nach einem oder mehreren der vorangehenden Ansprüche, dadurch gekennzeichnet, dass man im Vakuumbereich mit einem Absolutdruck von unterhalb 10 mbar und oberhalb $10^{-3}$ mbar, vorzugsweise zwischen 1 und 0,01 mbar, arbeitet.

8. Verfahren nach einem oder mehreren der vorangehenden Ansprüche, dadurch gekennzeichnet, dass man ein von Asphalten praktisch befreites Destillat gewinnt.

9. Verfahren nach einem oder mehreren der vorangehenden Ansprüche, dadurch gekennzeichnet, dass man in mehreren parallel-geschalteten Apparaturen, denen je eine Vakuumanlage zugeordnet ist, arbeitet.

10. Verfahren nach einem oder mehreren der vorangehenden Ansprüche, dadurch gekennzeichnet, dass man mit einer Heiztemperatur von oberhalb 350°C, vorzugsweise oberhalb 400°C, arbeitet.

11. Verfahren nach einem oder mehreren der vorangehenden Ansprüche, dadurch gekennzeichnet, dass man die Speisung und das Heizmedium im Gegenstrom führt.

12. Verfahren nach einem oder mehreren der vorangehenden Ansprüche, dadurch gekennzeichnet, dass man mit steigendem Temperaturverlauf arbeitet.

13. Verfahren nach einem oder mehreren der vorangehenden Ansprüche, dadurch gekennzeichnet, dass man mit im wesentlichen konstantem Druckverlauf arbeitet.

## Claims

1. Method for further processing of the residue remaining in the vacuum distillation in a crude oil refinery by thin-film short-path distillation in vacuo, in which the distillate and the concentrated residue are discharged separately, characterised in that, in the thin-film short-path distillation, the evaporator surfaces are heated in such a way that their temperature is adjusted to be higher than the temperature of the residue remaining in the vacuum distillation, so that thermal decomposition of the residue takes place.

2. Method according to Claim 1, characterised in that the temperature of the evaporator surface is 50°, preferably 80°C and especially 100°C higher than the temperature of the residue remaining in the vacuum distillation.

3. Method according to Claim 1, characterised in that the thin film of the material to be distilled is produced in the form of a turbulent film.

4. Method according to Claim 3, characterised in that turbulence is imparted to the film by mechanical means.

5. Method according to Claim 4, characterised in that turbulence is imparted to the film by means of wiper blades.

6. Method according to one or more of the preceding claims, characterised in that a vacuum distillation residue which has a boiling point above 550°C under normal pressure is used.

7. Method according to one or more of the preceding claims, characterised in that it is carried out in the vacuum range under an absolute pressure of below 10 mbar and above $10^{-3}$ mbar, preferably between 1 and 0.01 mbar.

8. Method according to one or more of the preceding claims, characterised in that a distillate virtually freed of asphalts is obtained.

9. Method according to one or more of the preceding claims, characterised in that it is carried out in a plurality of apparatus items connected in parallel, which are each associated with a vacuum unit.

10. Method according to one or more of the preceding claims, characterised in that a heating temperature above 350°C, preferably above 400°C, is used.

11. Method according to one or more of the preceding claims, characterised in that the feed and the heating medium flow in counter current.

12. Method according to one or more of the preceding claims, characterised in that it is carried out with an ascending temperature curve.

13. Method according to one or more of the preceding claims, characterised in that it is carried out with a substantially constant pressure curve.

**Revendications**

1. Procédé pour le retraitement du résidu de la distillation à vide dans une raffinerie de pétrole brut par distillation flash à couche mince sous vide, au cours duquel le distillat et le résidu concentré sont évacués séparément, **caractérisé en ce** que, pour la distillation flash à couche mince, les surfaces d'évaporation sont chauffées de manière que leur température est réglée à un niveau supérieur à la température du résidu de la distillation à vide de façon à provoquer une décomposition thermique dudit résidu.

2. Procédé selon la revendication 1, caractérisé en ce que la température de la surface d'évaporation est supérieure de 50°, de préférence de 80°C, et notamment de 100°C à la température du résidu de la distillation à vide.

3. Procédé selon la revendication 1, caractérisé en ce que la mince couche de matière à distiller est conformée en pellicule turbulente.

4. Procédé selon la revendication 3, caractérisé en ce que la turbulence de la pellicule est obtenue par des moyens mécaniques.

5. Procédé selon la revendication 4, caractérisé en ce que la turbulence de la pellicule est obtenue par des raclettes.

6. Procédé selon l'une ou plusieurs des revendications précédentes, caractérisé en ce que le résidu de la distillation à vide présente à la pression normale un point d'ébullition au-dessus de 550°C.

7. Procédé selon l'une ou plusieurs des revendications précédentes, caractérisé en ce que, sous vide, on travaille avec une pression absolue inférieure à 10 mbars et supérieure à $10^{-3}$ mbar, de préférence entre 1 et 0,01 mbar.

8. Procédé selon l'une ou plusieurs des revendications précédentes, caractérisé en ce que le distillat obtenu est pratiquement exempt d'asphaltes.

9. Procédé selon l'une ou plusieurs des revendications précédentes, caractérisé en ce qu'il fonctionne avec plusieurs installations montées en parallèle auxquelles est associée respectivement une installation à vide.

10. Procédé selon l'une ou plusieurs des revendications précédentes, caractérisé en ce qu'il fonctionne avec une température de chauffage supérieure à 350°C, de préférence supérieure à 400°C.

11. Procédé selon l'une ou plusieurs des revendications précédentes, caractérisé en ce que l'alimentation et le fluide de chauffage sont conduits en contre-courant.

12. Procédé selon l'une ou plusieurs des revendications précédentes, caractérisé en ce qu'il fonctionne avec une allure de température croissante.

13. Procédé selon l'une ou plusieurs des revendications précédentes, caractérisé en ce qu'il fonctionne avec une loi de pression sensiblement constante.

Fig.1

Fig. 2